(19) Europäisches Patentamt
European Patent Office
Office européen des brevets

(11) **EP 1 810 853 B1**

(12) **FASCICULE DE BREVET EUROPEEN**

(45) Date de publication et mention
de la délivrance du brevet:
**27.10.2010 Bulletin 2010/43**

(51) Int Cl.:
***B60G 17/015*** (2006.01) ***B60G 17/016*** (2006.01)
***B60G 21/055*** (2006.01)

(21) Numéro de dépôt: **06300044.2**

(22) Date de dépôt: **19.01.2006**

(54) **Suspension active de véhicule automobile avec commande anti-roulis**

Aktive Radaufhängung für ein Kraftfahrzeug mit Steuerung zur Eingrenzung der Rollbewegung

Automotive active suspension system for anti-rolling control

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**25.07.2007 Bulletin 2007/30**

(73) Titulaire: **Delphi Technologies, Inc.**
**Troy, MI 48007 (US)**

(72) Inventeurs:
• **Barth, Laurent**
**60200 Compiegne (FR)**
• **Delayre, Xavier**
**92400 Courbevoie (FR)**

(74) Mandataire: **Laget, Jean-Loup**
**Brema-Loyer**
**Le Centralis**
**63 avenue du Général Leclerc**
**92340 Bourg-la-Reine (FR)**

(56) Documents cités:
**WO-A-2004/080734 US-B1- 6 669 208**

• **PATENT ABSTRACTS OF JAPAN vol. 2003, no. 07, 3 juillet 2003 (2003-07-03) & JP 2003 080917 A (TOYOTA MOTOR CORP), 19 mars 2003 (2003-03-19)**

**Description**

La présente invention a pour objet un dispositif anti-roulis actif pour équiper un train de roues d'un véhicule automobile.

Des dispositifs anti-roulis actifs ou passifs sont généralement utilisés dans les véhicules pour augmenter le confort des occupants et la tenue de route du véhicule, notamment lors d'un virage. Comme exposé dans le document WO 2004/080734.

Le document EP 1 103 395 décrit un dispositif anti-roulis actif pour véhicule. Le véhicule comporte une paire de roues rotatives autour d'un essieu. Le dispositif anti-roulis comporte une barre de torsion. Dans un mode de réalisation, le dispositif anti-roulis comporte un bras connecté, d'une part, à une extrémité de la barre de torsion et, d'autre part, à un amortisseur associé à une roue de la paire de roues. Le dispositif anti-roulis comporte un actionneur hydraulique, dont une tige de piston est fixée à l'autre extrémité de la barre de torsion, et dont le carter est connecté à un amortisseur associé à l'autre roue de la paire de roues. L'actionneur hydraulique comporte deux chambres de fluide séparées par un piston fixé à la tige de piston. La pression dans chacune des deux chambres est commandée par des moyens de commande de manière à étendre ou à comprimer l'actionneur hydraulique en fonction d'une condition prédéterminée du véhicule.

Le dispositif anti-roulis décrit dans ce document présente l'inconvénient que le véhicule doit être équipé d'un circuit hydraulique. L'énergie utilisée pour contrôler le roulis avec un tel dispositif anti-roulis est importante. La présente invention a pour but de proposer un dispositif anti-roulis actif qui évite au moins certains des inconvénients précités et qui permette un contrôle efficace du roulis d'un véhicule.

A cet effet, l'invention a pour objet un dispositif anti-roulis actif pour équiper un train de roues d'un véhicule automobile, ledit train de roues comportant deux supports de roue couplés, avec une mobilité dans une direction dite verticale, à un châssis dudit véhicule, ledit dispositif anti-roulis comportant une barre de torsion liée au châssis et dont les extrémités libres sont destinées à être respectivement couplées auxdits supports de roue, caractérisé en ce qu'il comporte au moins un actionneur présentant une première zone connectée en un point excentré, par rapport à l'axe médian dudit véhicule, de ladite barre de torsion, par une liaison actionneur-barre, et une deuxième zone connectée audit châssis, par une liaison actionneur-châssis, ledit au moins un actionneur présentant des moyens d'actionnement pour créer un déplacement relatif entre lesdites première et deuxième zones, ledit au moins un actionneur étant agencé de manière à régler une distance sensiblement verticale entre ledit point excentré et ledit châssis en fonction d'un signal de commande, ledit dispositif anti-roulis actif comportant des moyens de commande pour émettre un signal de commande en direction dudit au moins un actionneur.

L'actionneur est commandé de manière à accroître le couple de rappel exercé par la barre de torsion. Le dispositif anti-roulis permet ainsi d'annuler, ou du moins de limiter, l'angle de roulis, par exemple pendant un virage. Cela permet d'assurer la sécurité du véhicule et d'augmenter le confort du ou des occupant(s) du véhicule.

Selon un mode de réalisation de l'invention, un dit actionneur comporte des moyens d'actionnement hydrauliques.

Selon un mode de réalisation de l'invention, un dit actionneur comporte des moyens d'actionnement électriques.

Selon un mode de réalisation de l'invention, ladite première zone d'un dit actionneur est liée à ladite deuxième zone dudit actionneur par une liaison pivot d'axe parallèle à une direction transversale dudit châssis, ladite première zone étant disposée de manière que l'axe de ladite liaison pivot et le point excentré de la barre de torsion soient dans un plan sensiblement horizontal par rapport audit châssis, ledit actionneur comportant des moyens de démultiplication d'effort couplés audits moyens d'actionnement et aptes à entraîner un pivotement de ladite première zone par rapport à ladite deuxième zone.

Selon une variante de ce mode de réalisation, lesdits moyens de démultiplication d'effort comportent un réducteur à vis écrou, lesdits moyens d'actionnement étant aptes à entraîner en rotation selon une direction longitudinale dudit châssis ladite vis, ladite vis étant apte à entraîner en translation selon ledit axe longitudinal ledit écrou, ledit écrou et l'une desdites zones de l'actionneur étant fixes l'un par rapport à l'autre, ladite vis étant liée à l'autre desdites zones de l'actionneur par une liaison pivot d'axe parallèle à une direction transversale dudit châssis.

Selon une autre variante de ce mode de réalisation, lesdits moyens de démultiplication d'effort comportent un secteur circulaire et une vis sans fin, lesdits moyens d'actionnement étant aptes à entraîner en rotation ladite vis sans fin, ladite vis sans fin étant apte à entraîner en rotation selon l'axe de ladite liaison pivot ledit secteur circulaire, ledit secteur circulaire et ladite première zone étant fixes l'un par rapport à l'autre.

Selon un mode de réalisation de l'invention, ladite première zone d'un dit actionneur est connectée à ladite deuxième zone dudit actionneur par une liaison glissière d'axe de glissière orienté selon ladite direction verticale, ledit actionneur comportant des moyens de démultiplication d'effort couplés auxdits moyens d'actionnement et aptes à entraîner une translation de direction dite verticale de ladite première zone par rapport à ladite deuxième zone.

Selon une variante de ce mode de réalisation, lesdits moyens de démultiplication d'effort comportent une crémaillère et un pignon, lesdits moyens d'actionnement étant aptes à faire tourner ledit pignon pour entraîner ladite crémaillère en translation selon ledit axe de glissière de direction dite verticale, ladite crémaillère et ladite première zone étant fixes l'une par rapport à l'autre.

Selon une autre variante de ce mode de réalisation, lesdits moyens de démultiplication d'effort comportent un réducteur à vis écrou, lesdits moyens d'actionnement étant aptes à entraîner en rotation selon un axe de direction dite verticale ladite vis, ladite vis étant apte à entraîner en translation selon ledit axe de direction dite verticale ledit écrou, ledit écrou et ladite première zone de l'actionneur étant fixes l'un par rapport à l'autre.

Selon un mode de réalisation de l'invention, le dispositif anti-roulis actif comporte deux actionneurs connectés, d'une part, audit châssis, et, d'autre part, en deux points excentrés respectifs situés de part et d'autre du centre de ladite barre de torsion.

Avantageusement, lesdits moyens de commande sont aptes à émettre deux signaux de commande à destination desdits actionneurs respectivement, de manière que lorsqu'un premier desdits actionneurs augmente la distance sensiblement verticale entre ledit point excentré qui lui est associé et ledit châssis, un deuxième desdits actionneurs diminue la distance sensiblement verticale entre ledit point excentré qui lui est associé et ledit châssis.

De préférence, un premier desdits actionneurs présente un temps de réponse plus rapide qu'un deuxième desdits actionneurs.

De préférence, un premier desdits actionneurs présente une plus petite course qu'un deuxième desdits actionneurs.

Selon un mode de réalisation de l'invention, la liaison actionneur-barre d'un dit actionneur permet une rotation de la première zone dudit premier actionneur par rapport à ladite barre de torsion selon un axe de ladite barre de torsion.

Selon un mode de réalisation de l'invention, la liaison actionneur-barre dudit actionneur permet une rotation de la première zone dudit premier actionneur par rapport à ladite barre de torsion selon une direction longitudinale dudit véhicule.

Selon un mode de réalisation de l'invention, la liaison actionneur-barre dudit actionneur permet translation de ladite première zone dudit actionneur par rapport à ladite barre de torsion selon ledit axe.

Selon un mode de réalisation de l'invention, ladite deuxième zone d'un dit actionneur est fixe par rapport audit châssis.

Selon un mode de réalisation de l'invention, ledit au moins un actionneur comporte deux premières zones connectées en deux points excentrés de ladite barre de torsion, situés de part et d'autre du centre de ladite barre de torsion, par deux liaisons actionneur-barre, ledit au moins un actionneur étant apte à régler une distance sensiblement verticale entre chacun desdits points excentrés et ledit châssis en fonction dudit signal de commande.

Selon une variante de ce mode de réalisation, l'une au moins desdites liaisons actionneur-barre permet une translation de ladite barre de torsion par rapport à ladite première zone correspondante selon une direction transversale dudit châssis, ledit au moins un actionneur comportant des moyens de démultiplication d'effort comportant un réducteur à vis écrou, lesdits moyens d'actionnement étant aptes à entraîner ladite vis en rotation selon une direction transversale dudit châssis, ladite vis étant apte à entraîner ledit écrou en translation dans ladite direction transversale, ledit écrou étant lié par une liaison pivot d'axe parallèle à une direction longitudinale dudit châssis à une troisième zone dudit au moins actionneur, ladite troisième zone étant liée aux dites deux premières zones de manière que, lorsque l'une desdites première zone effectue un déplacement par rapport audit châssis dans une direction de déplacement, l'autre desdites première zones effectue un déplacement par rapport au châssis dans une direction opposée à la direction de déplacement.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :

- la figure 1 est une vue schématique simplifiée de l'arrière d'un véhicule comportant un dispositif anti-roulis actif selon un premier mode de réalisation de l'invention ;
- la figure 2 est une vue schématique simplifiée de dessus du véhicule de la figure 1 ;
- la figure 3 est une vue similaire à la figure 1, le véhicule effectuant un virage à droite ;
- la figure 4 est une vue similaire à la figure 1, le véhicule comportant un dispositif anti-roulis actif selon un deuxième mode de réalisation de l'invention ;
- la figure 5 est une vue similaire à la figure 3 pour le deuxième mode de réalisation de l'invention ;
- les figures 6 à 12 sont des vues schématiques simplifiées montrant des exemple de réalisation d'une liaison actionneur-barre et d'une liaison actionneur-châssis ;
- les figures 13 à 16 sont des schémas cinématiques fonctionnels montrant des exemples de réalisation d'un actionneur de dispositif anti-roulis actif ; et
- la figure 17 est un schéma cinématique fonctionnel montrant un troisième mode de réalisation du dispositif anti-roulis actif.

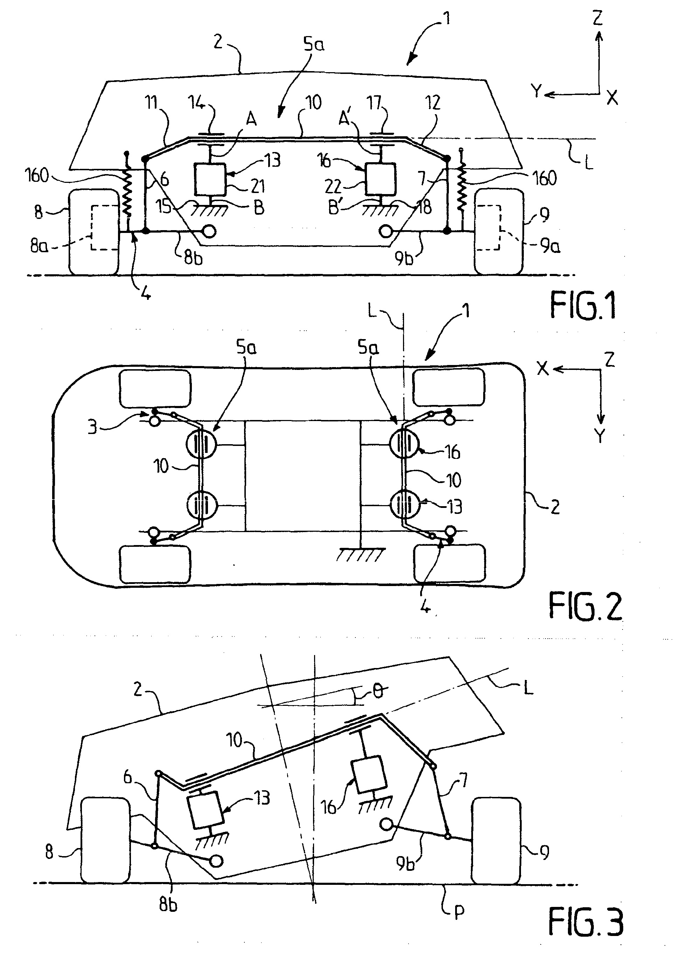

En se référant aux figures 1 et 2, on voit un véhicule 1 comportant un châssis 2, un train de roue avant 3, un train de roue arrière 4 et un dispositif anti-roulis actif 5a selon un premier mode de réalisation de l'invention. Le châssis 2, également appelé caisse, est la masse suspendue du véhicule 1, qui est en appui sur des jambes de force 160.

On va maintenant décrire plus en détail le train de roues arrière 4 et les éléments du dispositif anti-roulis actif 5a associés au train de roues arrière 4, les éléments du train de roues avant 3 et les éléments du dispositif anti-roulis actif 5a associés au train de roues avant 3 réalisés de manière similaire portent les même numéros de référence et ne seront pas décrit en détail.

Le train de roues 4 comporte deux roues 8 et 9 montées sur des porte-moyeux 8a et 9a couplés au châssis 2 avec une mobilité verticale, c'est-à-dire avec une mobilité selon la direction verticale Z, chaque porte-moyeu 8a, 9a étant fixé à l'extrémité d'un bras de suspension 8b et 9b respectivement. La direction verticale Z est définie ici comme la direction verticale par rapport au véhicule 1. De manière similaire, la direction longitudinale X désigne la direction longitudinale du véhicule 1 et la direction transversale Y désigne la direction transversale du véhicule 1.

Le dispositif anti-roulis 5a comporte une barre de torsion 10. La barre de torsion 10 a sensiblement une forme de U. L'extrémité libre de chaque portion latérale 11 et 12 de la barre de torsion 10 est couplée à un des bras de suspension 8b et 9b par une biellette 6 et 7, respectivement. La barre 10 présente par exemple une raideur de torsion relativement faible par rapport à l'axe L de la portion centrale de la barre 10, de direction Y. Cela permet d'augmenter le confort.

Le dispositif anti-roulis 5a comporte un actionneur 13 couplé, au niveau d'un point A, en un point excentré de la barre de torsion 10, par une liaison 14, et, au niveau d'un point B, au châssis 2 du véhicule 1, par une liaison 15. L'actionneur 13 comporte un boîtier 21, par exemple de forme sensiblement cylindrique.

Le dispositif anti-roulis 5 a comporte un actionneur 16 couplé, au niveau d'un point A', en un point excentré de la barre de torsion 10, par une liaison 17, et, au niveau d'un point B', au châssis 2 du véhicule 1, par une liaison 18. Le point A' est par exemple le point symétrique du point A par rapport au centre de la barre de torsion 10. L'actionneur comporte un boîtier 22, par exemple de forme sensiblement cylindrique.

L'actionneur 13 (respectivement l'actionneur 16) comporte deux zones mobiles l'une par rapport à l'autre dans la direction verticale Z et des moyens d'actionnement pour déplacer les deux zones l'une par rapport à l'autre de manière à régler une distance verticale entre les points A et B (respectivement les points A' et B'). Les moyens d'actionnement, qui seront décrits en détail plus loin, sont par exemple électriques. Des moyens d'actionnement électriques peuvent par exemple comprendre un moteur rotatif à courant continu avec collecteur mécanique, un moteur rotatif synchrone à aimant permanent, un moteur rotatif asynchrone, un moteur rotatif pas à pas ou un moteur linéaire électromagnétique synchrone à aimant permanent.

Les actionneurs 13, 16 sont connectés à des moyens de commande (non représentés), aptes recevoir des données provenant de capteurs (non représentés) ou de systèmes (non représentés) du véhicule 1, et à émettre des signaux de commande en direction des actionneurs 13, 16 pour régler la distance entre les points A et B et les points A' et B' en fonction des données provenant des capteurs et des systèmes. Les capteurs comprennent par exemple un capteur d'accélération latérale, un capteur d'angle volant, un capteur de vitesse véhicule, un capteur d'accélération longitudinale, un capteur de lacet, un capteur d'effort, placé sur une des deux biellettes 6 ou 7 ou sur chaque actionneur 13, 16. Les moyens de commande peuvent être connectés et utiliser des informations provenant d'autres systèmes de contrôle du véhicule, par exemple un système ABS (Anti lock Brake System) et un système ESP (Electronic Stability Program).

La figure 3 montre le véhicule 1 lors d'un virage à droite. Dans ce cas, le châssis 2 du véhicule 1 s'incline, à cause de l'accélération latérale, d'un angle de roulis θ par rapport au plan de la route, dit plan horizontal P, vers l'extérieur du virage. Cela a pour effet que la roue droite 9 exerce sur la barre de torsion 10 une force dirigée vers le bas et que la roue gauche 8 exerce sur la barre de torsion 10 une force dirigée vers le haut.

Dans cette position, la barre de torsion 10 est déformée et tend à reprendre élastiquement sa position de repos en ramenant le châssis 2 vers sa position initiale, ou position de repos (figure 1), par rapport aux roues 8, 9.

Simultanément, les moyens de commande commandent une diminution de la distance entre les points A et B. Dans ce cas, la barre de torsion 10 exerce une force dirigée vers le bas sur le support de roue 6, ce qui a pour effet d'éloigner la roue 8 du châssis 2, c'est-à-dire de ramener le châssis 2 vers sa position initiale (figure 1).

Simultanément, les moyens de commande commandent une augmentation de la distance entre les points A' et B'. Dans ce cas, la barre de torsion 10 exerce une force dirigée vers le haut sur le support de roue 7, ce qui a pour effet de rapprocher la roue 9 du châssis 2, c'est-à-dire de ramener le châssis 2 vers sa position initiale (figure 1).

En d'autres termes, les actionneurs 13 et 16 sont commandés de manière à accroître le couple de rappel exercé par la barre de torsion 10. Le dispositif anti-roulis 5a permet donc d'annuler, ou du moins de limiter, l'angle 0 du châssis 2 par rapport au plan horizontal P pendant un virage. De cette manière, la sécurité du véhicule 1 est assurée et le confort est augmenté pour le ou les occupant(s) du véhicule.

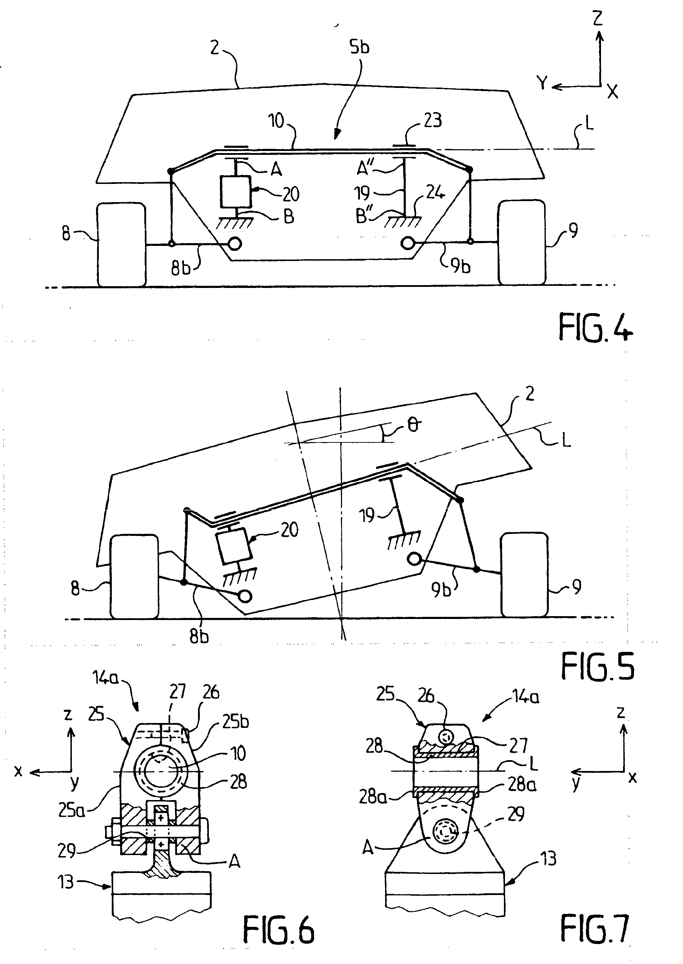

En se référant aux figures 4 et 5, on voit un dispositif anti-roulis 5b selon un deuxième mode de réalisation. Les éléments du dispositif anti-roulis 5b identiques au premier mode de réalisation sont désignés par le même chiffre de référence et ne sont pas décrits à nouveau. Ici, le dispositif anti-roulis 5b comporte un unique actionneur 20, qui est par exemple similaire à l'actionneur 13. Le dispositif anti-roulis 5b comporte des moyens de liaison 19 couplés, au niveau d'un point A", en un point excentré de la barre de torsion 10, par une liaison 23, qui est par exemple similaire à la liaison 17, et, au niveau d'un point B", au châssis 2 du véhicule 1, par une liaison 24, qui est par exemple similaire à la liaison 18. Le point A" est par exemple le point symétrique du point A par rapport au centre de la barre de torsion 10. La distance entre le point A" et le point B" est fixe. Le fonctionnement du dispositif anti-roulis 5b est similaire au fonctionnement du dispositif anti-roulis 5a, seule la distance entre les points A et B pouvant être réglée.

On va maintenant décrire plus en détail les liaisons 14, 15, 17 et 18 (respectivement les liaisons 14, 15, 23 et 24). Le réglage des distances entre les points A et B et A' et B' (respectivement A et B et A" et B") nécessite que la barre 10 soit apte à s'incliner par rapport à la direction longitudinale X. La barre 10 doit donc être apte à effectuer une rotation selon la direction X par rapport à au moins certaines des liaisons 14, 15, 17 et 18 (respectivement des liaisons 14, 15, 23 et 24). La barre 10 doit également pouvoir se déformer par une torsion selon l'axe L, ce qui nécessite que la barre 10 soit apte à effectuer une rotation selon l'axe L par rapport à au moins certaines des liaisons 14, 15, 17 et 18 (respectivement des liaisons 14, 15, 23 et 24). Le tableau 1 montre des combinaisons de degrés de liberté des liaisons 14, 15, 17 et 18 (respectivement des liaisons 14, 15, 23 et 24) qui permettent de mettre en oeuvre le premier mode de réalisation (respectivement le deuxième mode de réalisation).

Les figures 6 à 12 montrent des exemples de réalisation des liaisons 14 et 17 qui permettent d'obtenir les degrés de liberté du tableau 1.

En se référant aux figures 6 et 7, la liaison 14a comporte une chape 25 comprenant deux parties 25a et 25b fixées entre elles par une vis 26. La chape 25 comporte une ouverture traversante 27 de section circulaire dans laquelle une douille 28 en plastique est enserrée. La douille 28 comporte des rebords 28a permettant d'éviter un mouvement de la douille 28 par rapport à la chape 25 selon l'axe L. La barre 10 est insérée dans la douille 28. La chape 25 est couplée au point A de l'actionneur 13 par un roulement à billes 29 d'axe parallèle à la direction X. La liaison 14a permet une rotation selon la direction X et une rotation selon l'axe L de la barre 10 par rapport au point A. La liaison 14a peut permettre ou non une translation de la barre 10 par rapport au point A selon l'axe L.

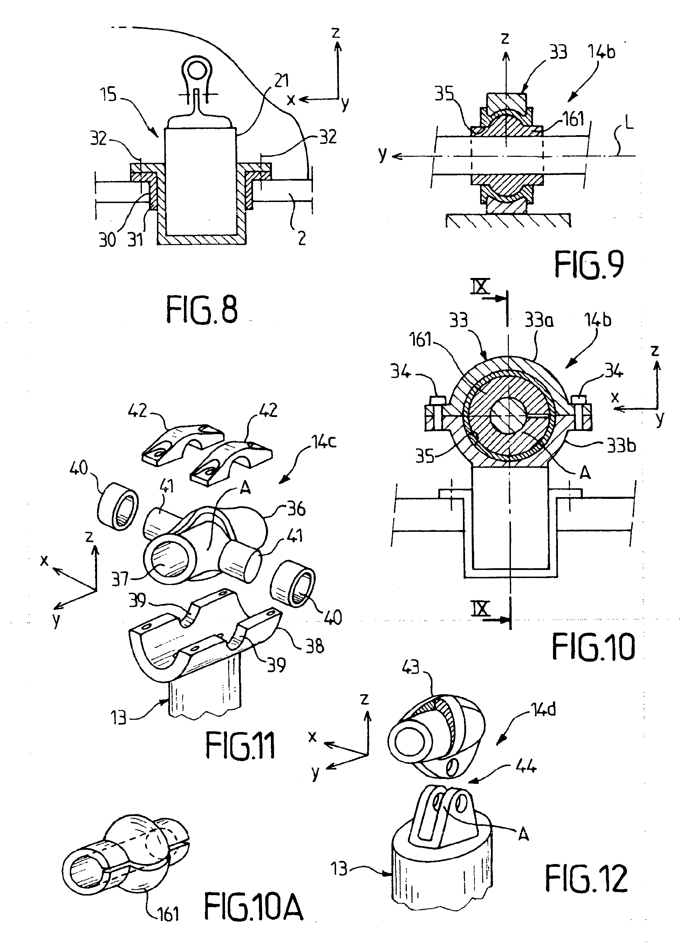

En se référant à la figure 8, la liaison 15 comporte un insert cylindrique 30 qui est inséré dans un berceau 31 du châssis 2 du véhicule. Le boîtier 21 est inséré dans l'insert 30 et fixé à celui-ci par des vis 32. La liaison 15 correspond à un encastrement de l'actionneur 13 dans le châssis 2.

En se référant aux figures 9, 10 et 10A, la liaison 14b comporte une rotule 33 en plastique comprenant deux parties 33a et 33b fixées entre elles par des vis 34. La barre 10 est insérée dans une pièce fendue 161 de section circulaire rotulant dans une pièce 35. La pièce 35 est serrée en chape par les parties 33a et 33b. La rotule 33 est fixée à l'actionneur 13 au niveau du point A. La liaison 14b permet une rotation selon les directions X et Y de la barre 10 par rapport au point A. La liaison 14b peut permettre ou non une translation de la barre 10 par rapport au point A selon l'axe L. Le boîtier 21 est encastré dans le châssis 2 de manière similaire à ce qui a été décrit en référence à la figure 8.

En se référant à la figure 11, la liaison 14c comporte une chape 36 comportant un orifice 37 de section circulaire pour l'insertion de la barre 10. La liaison 14c comporte un support de chape 38, fixé à l'actionneur 13. Le support de chape 38 a la forme d'un berceau et comporte sur chacune de ses parois latérales une ouverture 39 de forme semi cylindrique, les ouvertures 39 se faisant face. Des douilles à aiguilles 40 sont insérées dans les ouvertures 39 respectivement. Les douilles à aiguilles 40 coopèrent avec des excroissances 41 de la chape 36. Des éléments de fixation 42, qui sont par exemple vissés sur le support de chape 38 après la mise en place des douilles à aiguilles 40 sur la chape 36 et de la chape 36 sur le support de chape 38, permettent de maintenir en position les douilles à aiguilles 40 par rapport aux excroissances 41 et aux ouvertures 39. La liaison 14c permet une rotation de la barre 10 par rapport au point A selon la direction X et selon l'axe L. La liaison 14c peut permettre ou non une translation de la barre 10 par rapport au point A selon l'axe L.

En se référant à la figure 12, la liaison 14d comporte une chape 43 dans laquelle la barre 10 est destinée à être insérée. La chape 43 est couplée à l'actionneur 13, au niveau du point A, par une liaison pivot 44 d'axe parallèle à la direction X, qui est réalisée par un roulement ou par une douille à aiguilles.

La liaison 14 est ainsi réalisée par exemple par l'une des liaisons 14a à 14d. Les liaisons 17 et 23 peuvent être similaires à la liaison 14, c'est-à-dire que les liaisons 17 et 23 peuvent être réalisées par l'une des liaisons 14a à 14d. Les liaisons 18 et 24 sont réalisées par exemple de manière similaire à la liaison 15. On notera que la liaison 15 n'est pas nécessairement réalisée par un encastrement. En particulier, lorsque la liaison 15 doit permettre une rotation de l'actionneur 13 par rapport au châssis 2 selon la direction X, une liaison pivot peut être insérée entre le châssis 2 et le point B.

D'autres variantes sont possibles, par exemple les liaisons 14 et 17 peuvent être réalisées par un unique élément élastique de type silentbloc fixé à l'actionneur 13, 16, respectivement et dans lequel la barre 10 peut coulisser et tourner selon l'axe L.

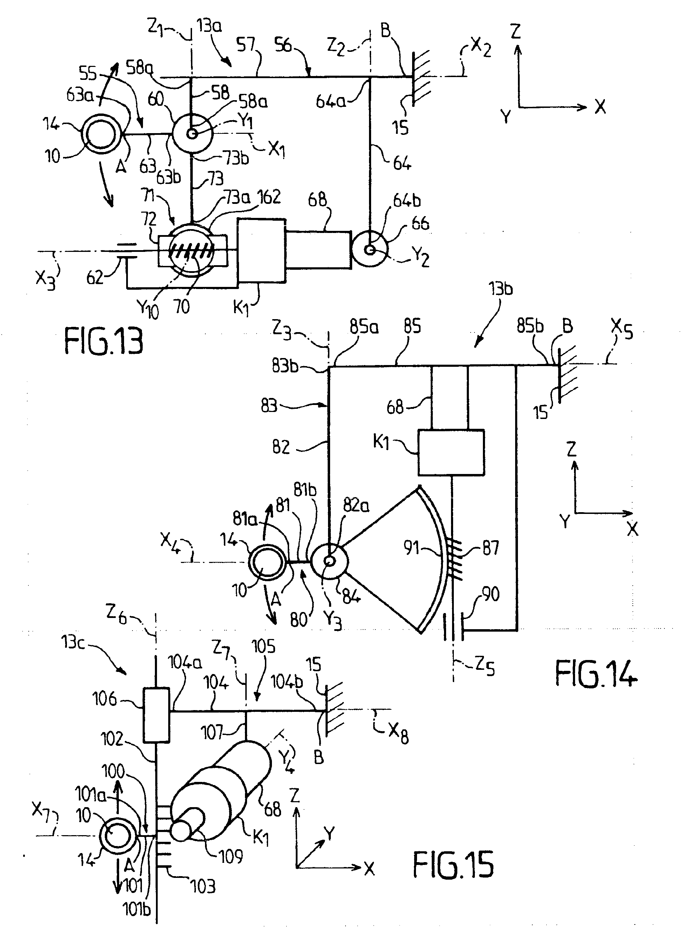

En se référant aux figures 13 à 16, on va maintenant décrire plusieurs réalisations possibles de l'actionneur 13, dans lesquelles l'actionneur 13 comporte un moteur rotatif 68 et des éléments de transmission. Le rapport de réduction peut être constant ou variable.

La figure 13 montre une première réalisation de l'actionneur 13.

Dans cette réalisation, une première zone 55 de l'actionneur 13a est couplée, au niveau du point A, à la barre de torsion 10, par la liaison 14. La liaison 14 est réalisée par exemple selon l'une des réalisations décrites précédemment en référence aux figures 6 à 12. Le point A est situé au niveau d'une extrémité 63a d'une branche 63 de la première zone 55, disposée selon un axe X1 de direction X. L'extrémité opposée 63b de la branche 63 est couplée à une extrémité 58a d'une branche 58 d'une deuxième zone 56 de l'actionneur 13a par une liaison pivot 60 d'axe Y1 de direction Y. La branche 58 est disposée selon un axe Z1 de direction Z. L'extrémité opposée 58a de la branche 58 est fixée à une branche 57 de la deuxième zone 56, disposée selon un axe X2 de direction X.

La branche 57 est couplée, au niveau du point B, au châssis 2, par la liaison 15, qui est par exemple un encastrement.

La branche 57 est fixée à une extrémité 64a d'une branche 64 de la deuxième zone 56 disposée selon un axe Z2 de direction Z, l'axe Z2 étant distinct de l'axe Z1. L'extrémité opposée 64b de la branche 64 est couplée au moteur rotatif 68 par une liaison pivot 66 d'axe Y2 de direction Y, qui est par exemple réalisée par un roulement à palier lisse. L'axe Y2 est distinct de l'axe Y1. Le moteur 68 est disposé de manière que son rotor soit apte à effectuer une rotation selon un axe X3 de direction X. Le rotor du moteur 68 est relié à une première partie 70 d'une vis à billes 71, disposée selon l'axe X3.

La première partie 70 de la vis à billes 71 est couplée au stator du moteur par une liaison pivot 62 d'axe X3. La liaison pivot 62 permet de maintenir la première partie 70 de la vis à billes 71 en position, notamment lorsque la première partie 70 de la vis à billes 71 est entraînée en rotation par le moteur 68. Une deuxième partie 72 de la vis à billes 71 est couplée à la première partie 70 de la vis à billes 71, de manière qu'une rotation de la première partie 70 entraîne une translation selon l'axe X3 de la deuxième partie 72 par rapport à la première partie 70. La deuxième partie 72, également appelée écrou, est couplée à une extrémité 73a d'une branche 73, disposée selon l'axe Z1, par une liaison pivot 162 d'axe Y10, qui est par exemple réalisée par deux roulements à billes placés de part et d'autre de la vis à billes 70. L'extrémité opposée 73b de la branche 73 est couplée à l'extrémité 58a de la branche 58 par la liaison pivot 60. En d'autres termes, la branche 73 est fixe par rapport à la branche 63 et la première zone 55 est donc constituée d'une équerre dont l'angle est au niveau de la liaison pivot 60.

Les fixations des branches 63, 58, 57, 64 et 73 sont par exemple réalisées par soudures. Les charges à supporter étant élevées, les branches 63, 58, 57, 64 et 73 sont réalisées par exemple en acier ou en aluminium.

Les parties 14, 63, 60, 73 et 72 forment un ensemble mobile, appelé basculeur, par rapport au châssis. Le basculeur peur être réalisé par exemple par une pièce mécano soudée ou par une pièce moulée.

Les parties 58, 57 et 64 forment un ensemble fixe, appelé embase, par rapport au châssis.

On va maintenant décrire le fonctionnement de l'actionneur 13a.

Lorsque le rotor du moteur 68 effectue une rotation d'axe X3, cela a pour effet d'entraîner une rotation selon l'axe X3 de la première partie 70 de la vis à billes 71. Le rapport de transmission est égal à :

$$\frac{\Omega m}{Vl} = k1 \frac{2\pi}{sl} rlr$$

où s1 est le pas de la vis 71, rlr est le rapport du bras de levier formé par les branches 73 et 63, k1 est le rapport de la transmission entre le moteur 68 et la vis 70, $\Omega m$ la vitesse angulaire du moteur et Vl la vitesse de l'actionneur.

La rotation de la première partie 70 a pour effet d'entraîner une translation selon l'axe X3 de la deuxième partie 72 par rapport à la première partie 70. La deuxième partie 72 exerce sur la branche 73 une force dirigée selon l'axe X3. Cela a pour effet d'entraîner simultanément une rotation selon l'axe Y2 du moteur 68 par rapport à la branche 64 et une rotation selon l'axe Y1 de la branche 73, donc de la branche 63, par rapport à la branche 58. La première zone 55 effectue ainsi un mouvement vertical par rapport à la deuxième zone 56, ce qui permet de régler la distance entre les points A et B.

La figure 14 montre une deuxième réalisation de l'actionneur 13.

Dans cette réalisation, une première zone 80 de l'actionneur 13b est couplée, au niveau du point A, à la barre de torsion 10, par la liaison 14. La liaison 14 est réalisée selon l'une des réalisations décrites précédemment en référence aux figures 6 à 12. Le point A est situé au niveau d'une extrémité 81a d'une branche 81 de la première zone 80, disposée selon un axe X4 de direction X. L'extrémité opposée 81b de la branche 81 est couplée à une extrémité 82a d'une branche 82 d'une deuxième zone 83 de l'actionneur 13b par une liaison pivot 84 d'axe Y3 de direction Y. La branche 82 est disposée selon un axe Z3 de direction Z. L'extrémité opposée 83b de la branche 83 est fixée à une extrémité 85a d'une branche 85 de la deuxième zone 83. La branche 85 est disposée selon un axe X5 de direction X. L'extrémité opposée 85b de la branche 85 est couplée au châssis 2, au niveau du point B, par la liaison 15, qui est par exemple un encastrement.

Le moteur 68 est fixé à la branche 85. Le moteur 68 est disposé de manière que son rotor soit apte à effectuer une rotation selon un axe Z5 de direction Z. Le rotor du moteur 68 est couplé à une vis sans fin 87. La vis sans fin 87 est disposée selon l'axe Z5. La vis sans fin 87 est couplée à la branche 85 par une liaison pivot 90 d'axe Z5. La liaison pivot 90 permet de maintenir la vis sans fin 87 en position, notamment lorsque la vis sans fin 87 est entraînée en rotation par le moteur 68.

Un secteur circulaire denté 91 est engagé dans la vis sans fin 87. Le centre du secteur angulaire 91 est couplé à la branche 82 par la liaison pivot 84. En d'autres termes, le secteur circulaire 91 est fixe par rapport à la branche 81.

On va maintenant décrire le fonctionnement de l'actionneur 13b.

Lorsque le rotor du moteur 68 effectue une rotation d'axe Z5, cela a pour effet d'entraîner une rotation selon l'axe Z5 de la vis sans fin 87. Le rapport de transmission est égal à :

$$\frac{\Omega m}{Vl} = k1 \frac{Zb}{Za} \frac{1}{Rb}$$

où Za est le nombre de filets de la vis 87, Zb est le nombre de dents d'une roue dentée de même rayon primitif que le secteur angulaire 91, Rb est la distance entre la liaison pivot 84 et la barre 10, k1 est le rapport de la transmission entre le moteur 68 et la vis 87, $\Omega m$ la vitesse angulaire du moteur 68, V1 la vitesse de l'actionneur 13b.

La rotation de la vis sans fin 87 a pour effet une rotation selon l'axe Y3 du secteur angulaire 91 par rapport à la branche 82, donc une rotation selon l'axe Y3 de la branche 81 par rapport à la branche 82. La première zone 80 effectue ainsi un mouvement vertical par rapport à la deuxième zone 83, ce qui permet de régler la distance selon la direction Z entre les points A et B.

La figure 15 montre une troisième réalisation de l'actionneur 13.

Dans cette réalisation, une première zone 100 de l'actionneur 13c est couplée, au niveau du point A, à la barre de torsion 10, par la liaison 14. La liaison 14 est réalisée selon l'une des réalisations décrites précédemment en référence aux figures 6 à 12. Le point A est situé au niveau d'une extrémité 101a d'une branche 101 de la première zone 100, disposée selon un axe X7 de direction X. L'extrémité opposée 101b de la branche 101 est fixée à une branche 102 comportant une crémaillère 103. La branche 102 est disposée selon un axe Z6 de direction Z. La branche 102 est couplée à une extrémité 104a d'une branche 104 d'une deuxième zone 105 de l'actionneur 13c par une liaison glissière 106 d'axe Z6, qui est par exemple réalisée par une glissière à billes. La branche 104 est disposée selon un axe X8 de direction X. L'extrémité opposée 104b de la branche 104 est couplée, au niveau du point B, avec le châssis 2, par la liaison 15, qui est par exemple un encastrement. La branche 104 est fixée à une branche 107 disposée selon un axe Z7 de direction Z. La branche 107 est fixée au moteur 68. Le moteur 68 est disposé de manière que son rotor soit apte à effectuer une rotation selon un axe Y4 de direction Y. Le rotor du moteur 68 est fixé à un pignon 109 engagé dans la crémaillère 103.

On va maintenant décrire le fonctionnement de l'actionneur 13c.

Lorsque le rotor du moteur 68 effectue une rotation d'axe Y4, cela a pour effet d'entraîner une rotation selon l'axe Y4 du pignon 109. Le rapport de transmission est égal à :

$$\frac{\Omega m}{Vl} = k1 * k2$$

où k1 est le rapport de la transmission entre le moteur 68 et le pignon 109 et k2 est le rapport du système crémaillère-pignon en millimètre par révolution.

La rotation du pignon 109 a pour effet une translation selon l'axe Z6 de la crémaillère 103, donc de la branche 101, par rapport à la branche 104. La première zone 100 effectue ainsi un mouvement vertical par rapport à la deuxième zone 105, ce qui permet de régler la distance entre les points A et B.

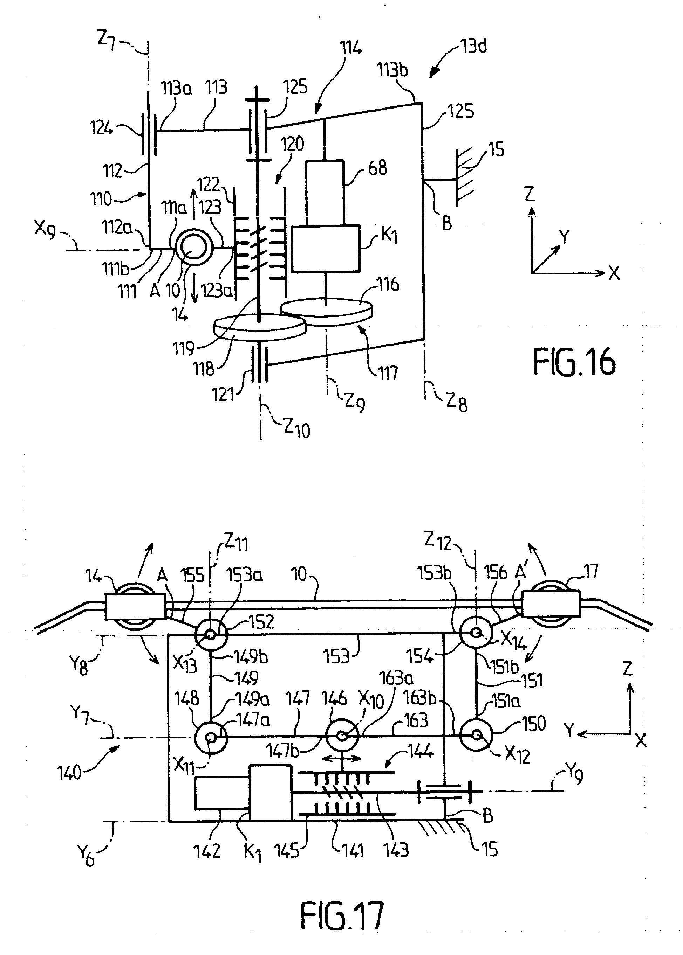

La figure 16 montre une quatrième réalisation de l'actionneur 13.

Dans cette réalisation, une première zone 110 de l'actionneur 13d est couplée, au niveau du point A, à la barre de torsion 10, par la liaison 14. La liaison 14 est réalisée selon l'une des réalisations décrites précédemment en référence aux figures 6 à 12. Le point A est situé au niveau d'une extrémité 111 a d'une branche 111 de la première zone 110, disposée selon un axe X9 de direction X. L'extrémité opposée 111b de la branche 111 est fixée à une extrémité 112a d'une branche 112 disposée selon un axe Z7 de direction Z. La branche 112 est couplée par une liaison glissière 124 d'axe Z7, qui est par exemple réalisée par une douille à bille, à une extrémité 113a d'une branche 113 d'une deuxième zone 114 de l'actionneur 13d. L'extrémité opposée 113b de la branche 113 est fixée à une branche 125 disposée selon un axe Z8 de direction Z. La branche 125 est couplée, au niveau du point B, avec le châssis 2, par la liaison 15, qui est par exemple un encastrement.

Le moteur rotatif 68 est fixé à la branche 113 de manière que son rotor soit apte à effectuer une rotation selon un axe Z9 de direction Z. Le rotor du moteur 68 est fixé au centre d'un disque denté 116 d'un système d'engrenage 117 disposé dans un plan sensiblement horizontal. Le disque denté 116 est engagé dans un disque denté 118 du système d'engrenage 117. Le centre du disque denté 118 est fixé à une première partie 119 d'une vis à billes 120, disposée selon un axe Z10 de direction Z. La première partie 119 est couplée à la branche 125 par une liaison pivot 121 d'axe Z10. La liaison pivot 121 permet de maintenir la première partie 119 en position, notamment lorsque la première partie 119 est entraînée en rotation par le moteur 68. La première partie 119 est couplée à la branche 113 par une liaison pivot 125 d'axe Z10, qui est par exemple réalisé par une douille à aiguille.

Une deuxième partie 122 de la vis à billes 120 est couplée à la première partie 119 de la vis à billes 120, de manière qu'une rotation de la première partie 119 entraîne une translation selon l'axe Z10 de la deuxième partie 122 par rapport à la première partie 119. La deuxième partie 122 est fixée à une extrémité 123a d'une branche 123 disposée selon l'axe X9. La branche 123 est fixe par rapport à la branche 111.

On va maintenant décrire le fonctionnement de l'actionneur 13d.

Lorsque le rotor du moteur 68 effectue une rotation d'axe Z9, cela a pour effet d'entraîner une rotation selon l'axe Z9 du disque 116. Le rapport de transmission est égal à :

$$\frac{\Omega m}{Vl} = k1 \frac{2\pi}{sl}$$

où s1 est le pas de la vis 120, k1 est le rapport de la transmission entre le moteur 68 et la première partie de la vis 120, Ωm la vitesse angulaire du moteur et V11a vitesse de l'actionneur 13d.

La rotation du disque 116 entraîne une rotation selon l'axe Z10 du disque 118. La rotation du disque 118 entraîne une rotation selon l'axe Z10 de la première partie 119. La rotation de la première partie 119 entraîne une translation selon l'axe Z10 de la deuxième partie 122 par rapport à la première partie 119. La translation de la deuxième partie 122 entraîne une translation dans la direction Z de la branche 123 par rapport à la branche 113. La première zone 110 effectue ainsi un mouvement vertical par rapport à la deuxième zone 114, ce qui permet de régler la distance entre les points A et B.

L'actionneur 13 est ainsi réalisé selon l'une des réalisations 13a à 13d. Les actionneurs 16 et 20 peuvent également être réalisés selon l'une des réalisations 13a à 13d. On notera que, dans le premier mode de réalisation, l'actionneur 13 n'est pas nécessairement identique à l'actionneur 16.

On va maintenant décrire un exemple d'actionneur 13a. Le moteur est un moteur synchrone sans balai. Le couple maximal est de 1.1 Nm. On notera que le couple dépend de la masse du véhicule et du type de dynamique du système (sportif, ...). La vitesse maximale sans charge est de 3800 tours par minute. Le rapport du bras de levier rlr est égal à 2, le pas de la vis s1 est égal à 3.5 mm par révolution et le rapport k1 est égal à 2.68.

La masse du véhicule est inférieure ou égale à 2020 kg. La distance du centre de gravité à l'axe de roulis est égale à 650 mm. L'accélération latérale est inférieure ou égale à 1g.

L'angle de roulis est de 2.5 degrés. La raideur de torsion de la barre de torsion est de 720Nm/degré.

La charge de l'actionneur 13a est de +/- 6500 N. Le déplacement de l'actionneur 13a est de +/- 5.4 mm. La puissance maximale de l'actionneur 13a est de 540 W.

La figure 17 montre un troisième mode de réalisation dans lequel un actionneur 140 est couplé à la barre 10, au niveau du point A, par la liaison 14, et, au niveau du point A', par la liaison 17. Ici, le point B et le point B' sont confondus, l'actionneur 140 étant couplé au châssis 2, au niveau du point B, par la liaison 15, qui est par exemple un encastrement.

Le point B appartient à une branche 141 de l'actionneur 140 disposée selon un axe Y6 de direction Y. Un moteur 142, qui est par exemple similaire au moteur 68, est fixé à la branche 141 de manière que son rotor soit apte à effectuer une rotation selon un axe Y9 de direction Y. Une première partie 143 d'une vis à bille 144, disposée selon l'axe Y9, est fixée au rotor du moteur 142. La première partie 143 est apte à entraîner en translation selon l'axe Y9 une deuxième partie 145 de la vis à billes 144. La deuxième partie 145 est couplée par une liaison pivot 146 d'axe X10 de direction X à une branche 147. La branche 147 est disposée selon un axe Y7 de direction Y. Une extrémité 147a de la branche 147 est couplée par une liaison pivot 148 d'axe X11 à une extrémité 149a d'une branche 149. La deuxième partie 145 est couplée par la liaison pivot 146 à une branche 163. La branche 163 est disposée selon l'axe Y7. Une extrémité 163b de la branche 163 est couplée par une liaison pivot 150 d'axe X12 à une extrémité 151a d'une branche 151. L'extrémité 147b de la branche 147 est couplée à l'extrémité 163 a de la branche 163, au niveau de la liaison pivot 146, de manière que les branches 147 et 163 soient mobiles en rotation l'une par rapport à l'autre selon l'axe X 10.

La branche 149 est disposée selon un axe Z11. L'extrémité opposée 149b de la branche 149 est couplée par une liaison pivot 152 d'axe X13 à une extrémité 153a d'une branche 153. La branche 153 est disposée selon un axe Y8 de direction Y. Une branche 155, comprenant le point A, est couplée par la liaison pivot 152 à la branche 153. En d'autres termes, la branche 149 est fixe par rapport à la branche 155.

La branche 151 est disposée selon un axe Z12. L'extrémité opposée 151b de la branche 151 est couplée par une liaison pivot 154 d'axe X14 à une extrémité 153b de la branche 153. Une branche 156, comprenant le point A', est couplée par la liaison pivot 154 à la branche 153. En d'autres termes, la branche 151 est fixe par rapport à la branche 156.

On va maintenant décrire le fonctionnement de l'actionneur 140.

Lorsque le moteur rotatif 142 entraîne en rotation selon l'axe Y9 la première partie 143, la deuxième partie 145 de la vis à billes 144 effectue une translation d'axe Y9 par rapport à la première partie 143. La deuxième partie 145 exerce une force de direction Y sur la branche 147 et sur la branche 163. Les branches 147 et 163 se translatent selon la direction Y par rapport à la première partie 143 et s'inclinent l'une par rapport à l'autre selon l'axe X10. Cela a pour effet que la branche 149 pivote par rapport à la branche 147 selon l'axe X11 et par rapport à la branche 153 selon l'axe X13. La branche 155 effectue ainsi un mouvement vertical par rapport à la branche 141, ce qui permet de régler la distance entre les points A et B. De manière similaire, la branche 151 pivote par rapport à la branche 163 selon l'axe X12 et par rapport à la branche 153 selon l'axe X14. La branche 156 effectue ainsi un mouvement vertical par rapport à la branche 141, ce qui permet de régler la distance entre les points A' et B. On notera qu'une augmentation de la distance entre les points A et B entraîne nécessairement une diminution de la distance entre les points A' et B, et inversement.

D'autres variantes d'actionneur sont possibles.

Par exemple, l'actionnement des actionneurs peut être réalisé par un moteur linéaire à entraînement direct ou par un actionneur électromécanique linéaire.

Les actionneurs peuvent être hydrauliques. Un actionneur hydraulique comporte deux chambres de fluide séparées par un piston, la tige du piston étant par exemple couplée à la barre 10 et le carter du pison étant couplé au châssis. Dans ce cas le véhicule est équipé d'une pompe hydraulique et de vannes.

La barre de torsion peut être de forme quelconque. Cela permet d'implémenter facilement le dispositif anti-roulis en contournant les éléments du véhicule, notamment les organes de transmission.

Dans le premier mode de réalisation, les actionneurs sont déplacés en direction opposée, mais pas nécessairement de la même distance. Les actionneurs peuvent avoir des caractéristiques différentes en terme de puissance, de charge maximale et de temps de réponse. Par exemple, un actionneur peut être un actionneur électromécanique avec un temps de réponse plus rapide et une course plus courte que le deuxième actionneur Le système peut ainsi contrôler avec le premier actionneur les petites accélérations latérales rapides, qui se produisent régulièrement, et contrôler avec l'autre actionneur l'angle de roulis pour les grandes accélérations latérales.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Tableau 1

|  |  | A | A'/A" | B | B'/B" |
|---|---|---|---|---|---|
| Cas 1 |  | Pivot X Pivot L Pas de translation L | Pivot X Pivot L Translation L | encastrement | encastrement |
| Cas 2 |  | Pivot X Pivot L Pas de translation L | Pivot X Pivot L Pas de translation L | encastrement | Pivot X |
| Cas 3 |  | Pivot L Pas de translation L | Pivot L Translation L | Pivot X | Pivot X |
| Cas 4 |  | Pivot X Pivot L | Pivot X Pivot L | Pivot X | Pivot X |

(suite)

| | A | A'/A" | B | B'/B" |
|---|---|---|---|---|
| | Pas de translation L | Pas de translation L | | |

## Revendications

1. Dispositif anti-roulis actif (5a, 5b) pour équiper un train de roues (3, 4) d'un véhicule (1) automobile, ledit train de roues comportant deux supports de roue (8b, 9b) couplés, avec une mobilité dans une direction dite verticale (Z), à un châssis (2) dudit véhicule, ledit dispositif anti-roulis comportant une barre de torsion (10) liée au châssis et dont les extrémités libres sont destinées à être respectivement couplées auxdits supports de roue,
ledit dispositif anti-roulis comportant au moins un actionneur (13, 16, 20, 140) présentant une première zone connectée en un point excentré, par rapport à l'axe médian dudit véhicule, de ladite barre de torsion, par une liaison actionneur-barre (14), et une deuxième zone connectée audit châssis, par une liaison actionneur-châssis (15), ledit au moins un actionneur présentant des moyens d'actionnement pour créer un déplacement relatif entre lesdites première et deuxième zones, ledit au moins un actionneur étant agencé de manière à régler une distance sensiblement verticale entre ledit point excentré et ledit châssis en fonction d'un signal de commande, ledit dispositif anti-roulis actif comportant des moyens de commande pour émettre un signal de commande en direction dudit au moins un actionneur, **caractérisé en ce que** ledit au moins un actionneur comporte des moyens d'actionnement électriques.

2. Dispositif anti-roulis actif selon la revendication 1, **caractérisé en ce que** ladite première zone d'un dit actionneur (13a, 13b) est liée à ladite deuxième zone dudit actionneur par une liaison pivot (60, 84) d'axe (Y1, Y3) parallèle à une direction transversale (Y) dudit châssis, ladite première zone étant disposée de manière que l'axe de ladite liaison pivot et le point excentré de la barre de torsion soient dans un plan sensiblement horizontal par rapport audit châssis, ledit actionneur comportant des moyens de démultiplication d'effort couplés audits moyens d'actionnement et aptes à entraîner un pivotement de ladite première zone par rapport à ladite deuxième zone.

3. Dispositif anti-roulis actif selon la revendication 2, **caractérisé en ce que** lesdits moyens de démultiplication d'effort comportent un réducteur à vis écrou (71), lesdits moyens d'actionnement étant aptes à entraîner en rotation selon une direction longitudinale dudit châssis ladite vis (70), ladite vis étant apte à entraîner en translation selon ledit axe longitudinal ledit écrou (72), ledit écrou et l'une desdites zones (55) de l'actionneur étant fixes l'un par rapport à l'autre, ladite vis étant liée à l'autre desdites zones (56) de l'actionneur par une liaison pivot (66) d'axe (Y2) parallèle à une direction transversale dudit châssis.

4. Dispositif anti-roulis actif selon la revendication 2, **caractérisé en ce que** lesdits moyens de démultiplication d'effort comportent un secteur circulaire (91) et une vis sans fin (87), lesdits moyens d'actionnement étant aptes à entraîner en rotation ladite vis sans fin, ladite vis sans fin étant apte à entraîner en rotation selon l'axe (Y3) de ladite liaison pivot ledit secteur circulaire, ledit secteur circulaire et ladite première zone (80) étant fixes l'un par rapport à l'autre.

5. Dispositif anti-roulis actif selon l'une quelconque des revendications 1 à 4, **caractérisé en ce que** ladite première zone d'un dit actionneur (13c, 13d) est connectée à ladite deuxième zone dudit actionneur par une liaison glissière (106, 124) d'axe (Z6, Z7) de glissière orienté selon ladite direction verticale (Z), ledit actionneur comportant des moyens de démultiplication d'effort couplés auxdits moyens d'actionnement et aptes à entraîner une translation de direction dite verticale de ladite première zone par rapport à ladite deuxième zone.

6. Dispositif anti-roulis actif selon la revendication 5 **caractérisé en ce que** lesdits moyens de démultiplication d'effort comportent une crémaillère (103) et un pignon (109), lesdits moyens d'actionnement étant aptes à faire tourner ledit pignon pour entraîner ladite crémaillère en translation selon ledit axe de glissière de direction dite verticale, ladite crémaillère et ladite première zone (100) étant fixes l'une par rapport à l'autre.

7. Dispositif anti-roulis selon la revendication 5, **caractérisé en ce que** lesdits moyens de démultiplication d'effort comportent un réducteur à vis écrou (120), lesdits moyens d'actionnement étant aptes à entraîner en rotation selon un axe de direction dite verticale ladite vis (119), ladite vis étant apte à entraîner en translation selon ledit axe de direction dite verticale ledit écrou (122), ledit écrou et ladite première zone (110) de l'actionneur étant fixes l'un par rapport à l'autre.

8. Dispositif anti-roulis actif selon l'une quelconque des revendications 1 à 7, **caractérisé en ce qu'**il comporte deux actionneurs (13, 16) connectés, d'une part, audit châssis, et, d'autre part, en deux points excentrés respectifs situés de part et d'autre du centre de ladite barre de torsion.

9. Dispositif anti-roulis actif selon la revendication 8, **caractérisé en ce que** lesdits moyens de commande sont aptes à émettre deux signaux de commande à destination desdits actionneurs respectivement, de manière que lorsqu'un premier desdits actionneurs augmente la distance sensiblement verticale entre ledit point excentré qui lui est associé et ledit châssis, un deuxième desdits actionneurs diminue la distance sensiblement verticale entre ledit point excentré qui lui est associé et ledit châssis.

10. Dispositif anti-roulis actif selon la revendication 8 ou 9, **caractérisé en ce qu'**un premier desdits actionneurs présente un temps de réponse plus rapide qu'un deuxième desdits actionneurs.

11. Dispositif anti-roulis selon l'une quelconque des revendications 8 à 10, **caractérisé en ce qu'**un premier desdits actionneurs présente une plus petite course qu'un deuxième desdits actionneurs.

12. Dispositif anti-roulis selon l'une quelconque des revendications 1 à 11, **caractérisé en ce que** la liaison actionneur-barre (14) d'un dit actionneur permet une rotation de la première zone dudit premier actionneur par rapport à ladite barre de torsion selon un axe (L) de ladite barre de torsion.

13. Dispositif anti-roulis selon la revendication 12, **caractérisé en ce que** la liaison actionneur-barre dudit actionneur permet une rotation de la première zone dudit premier actionneur par rapport à ladite barre de torsion selon une direction longitudinale (X) dudit véhicule.

14. Dispositif anti-roulis selon la revendication 13, **caractérisé en ce que** la liaison actionneur-barre dudit actionneur permet translation de ladite première zone dudit actionneur par rapport à ladite barre de torsion selon ledit axe (L).

15. Dispositif anti-roulis selon l'une quelconque des revendications 1 à 14, **caractérisé en ce que** ladite deuxième zone d'un dit actionneur est fixe par rapport audit châssis.

16. Dispositif anti-roulis selon la revendication 1, **caractérisé en ce que** ledit au moins un actionneur (140) comporte deux premières zones connectées en deux points excentrés de ladite barre de torsion (10), situés de part et d'autre du centre de ladite barre de torsion, par deux liaisons actionneur-barre (14, 17), ledit au moins un actionneur étant apte à régler une distance sensiblement verticale entre chacun desdits points excentrés et ledit châssis en fonction dudit signal de commande.

17. Dispositif anti-roulis selon la revendication 16, **caractérisé en ce que** l'une au moins desdites liaisons actionneur-barre permet une translation de ladite barre de torsion par rapport à ladite première zone correspondante selon une direction transversale dudit châssis, ledit au moins un actionneur comportant des moyens de démultiplication d'effort comportant un réducteur à vis écrou (144), lesdits moyens d'actionnement étant aptes à entraîner ladite vis (143) en rotation selon une direction transversale (Y) dudit châssis, ladite vis étant apte à entraîner ledit écrou (145) en translation dans ladite direction transversale, ledit écrou étant lié par une liaison pivot (146) d'axe (X10) parallèle à une direction longitudinale dudit châssis à une troisième zone dudit au moins actionneur, ladite troisième zone étant liée aux dites deux premières zones de manière que, lorsque l'une desdites première zone effectue un déplacement par rapport audit châssis dans une direction de déplacement, l'autre desdites première zones effectue un déplacement par rapport au châssis dans une direction opposée à la direction de déplacement.

**Claims**

1. Active anti-roll device (5a, 5b) to be fitted to a wheelset (3, 4) of a motor vehicle (1), said wheelset comprising two wheel supports (8b, 9b) which are coupled, with mobility in a so-called vertical direction (Z), to a frame (2) of said vehicle, said anti-roll device comprising a torsion bar (10) which is linked to the frame and the free ends of which are intended to be respectively coupled to said wheel supports,
said anti-roll device comprising at least one actuator (13, 16, 20, 140) having a first zone connected to an eccentric point, relative to the median axis of said vehicle, of said torsion bar by an actuator-bar linkage (14), and a second zone connected to said frame by an actuator-frame linkage (15), said at least one actuator having actuation means for creating a relative displacement between said first and second zones, said at least one actuator being able to adjust a substantially vertical distance between said eccentric point and said frame as a function of a control signal, said active anti-roll device comprising control means for transmitting a control signal to said at least one actuator, **characterised in that** said at least one actuator comprises electrical actuation means.

2. Active anti-roll device according to claim 1, **characterised in that** said first zone of a said actuator (13a, 13b) is linked to said second zone of said actuator by a pivot linkage (60, 84) of axis (Y1, Y3) parallel to a transverse direction (Y) of said frame, said first zone being arranged in such a way that the axis of said pivot linkage and the eccentric point of the torsion bar are in a substantially horizontal plane relative to said frame, said actuator comprising force reduction means coupled to said actuation means and able to bring about a pivoting of said first zone relative to said second zone.

3. Active anti-roll device according to claim 2, **characterised in that** said force reduction means comprise a screw/nut reducer (71), said actuation means being able to drive said screw (70) in rotation about a longitudinal direction of said frame, said screw being able to drive said nut (72) in translation along said longitudinal axis, said nut and one of said zones (55) of the actuator being fixed relative to one another, said screw being linked to the other of said zones (56) of the actuator by a pivot linkage (66) of axis (Y2) parallel to a transverse direction of said frame.

4. Active anti-roll device according to claim 2, **characterised in that** said force reduction means comprise a sector of a circle (91) and a worm screw (87), said actuation means being able to drive said worm screw in rotation, said worm screw being able to drive said sector of a circle in rotation about the axis (Y3) of said pivot linkage, said sector of a circle and said first zone (80) being fixed relative to one another.

5. Active anti-roll device according to any one of claims 1 to 4, **characterised in that** said first zone of a said actuator (13c, 13d) is connected to said second zone of said actuator by a sliding linkage (106, 124) of slide axis (Z6, Z7) oriented in said vertical direction (Z), said actuator comprising force reduction means coupled to said actuation means and able to bring about a translation of said first zone relative to said second zone in a so-called vertical direction.

6. Active anti-roll device according to claim 5, **characterised in that** said force reduction means comprise a rack (103) and a pinion (109), said actuation means being able to rotate said pinion in order to drive said rack in translation along said slide axis of so-called vertical direction, said rack and said first zone (100) being fixed relative to one another.

7. Anti-roll device according to claim 5, **characterised in that** said force reduction means comprise a screw/nut reducer (120), said actuation means being able to drive said screw (119) in rotation about an axis of so-called vertical direction, said screw being able to drive said nut (122) in translation along said axis of so-called vertical direction, said nut and said first zone (110) of the actuator being fixed relative to one another.

8. Active anti-roll device according to any one of claims 1 to 7, **characterised in that** it comprises two actuators (13, 16) connected on the one hand to said frame and on the other hand to two respective eccentric points located on either side of the centre of said torsion bar.

9. Active anti-roll device according to claim 8, **characterised in that** said control means are able to transmit two control signals to said actuators respectively, in such a way that, when a first of said actuators increases the substantially vertical distance between said eccentric point associated therewith and said frame, a second of said actuators reduces the substantially vertical distance between said eccentric point associated therewith and said frame.

10. Active anti-roll device according to claim 8 or 9, **characterised in that** a first of said actuators has a faster response time than a second of said actuators.

11. Anti-roll device according to any one of claims 8 to 10, **characterised in that** a first of said actuators has a shorter stroke than a second of said actuators.

12. Anti-roll device according to any one of claims 1 to 11, **characterised in that** the actuator-bar linkage (14) of a said actuator allows a rotation of the first zone of said first actuator relative to said torsion bar about an axis (L) of said torsion bar.

13. Anti-roll device according to claim 12, **characterised in that** the actuator-bar linkage of said actuator allows a rotation of the first zone of said first actuator relative to said torsion bar about a longitudinal direction (X) of said vehicle.

14. Anti-roll device according to claim 13, **characterised in that** the actuator-bar linkage of said actuator allows a translation of said first zone of said actuator relative to said torsion bar along said axis (L).

15. Anti-roll device according to any one of claims 1 to 14, **characterised in that** said second zone of a said actuator is fixed relative to said frame.

16. Anti-roll device according to claim 1, **characterised in that** said at least one actuator (140) comprises two first zones connected to two eccentric points of said torsion bar (10), located on either side of the centre of said torsion bar, by two actuator-bar linkages (14, 17), said at least one actuator being able to adjust a substantially vertical distance between each of said eccentric points and said frame as a function of said control signal.

17. Anti-roll device according to claim 16, **characterised in that** at least one of said actuator-bar linkages allows a translation of said torsion bar relative to said corresponding first zone in a transverse direction of said frame, said at least one actuator comprising force reduction means comprising a screw/nut reducer (144), said actuation means being able to drive said screw (143) in rotation about a transverse direction (Y) of said frame, said screw being able to drive said nut (145) in translation in said transverse direction, said nut being linked by a pivot linkage (146) of axis (X10) parallel to a longitudinal direction of said frame to a third zone of said at least one actuator, said third zone being linked to said two first zones in such a way that, when one of said first zones carries out a displacement relative to said frame in a direction of displacement, the other of said first zones carries out a displacement relative to the frame in a direction opposite to the direction of displacement.


**Patentansprüche**

1. Aktive Vorrichtung zur Eingrenzung der Rollbewebung (5a, 5b), um einen Radsatz (3, 4) eines Kraftfahrzeugs (1) auszustatten, wobei der Radsatz zwei Radaufhängungen (8b, 9b) umfasst, die mit einer Beweglichkeit in einer als vertikal bezeichneten Richtung (Z) an ein Fahrgestell (2) des Fahrzeugs gekoppelt sind, wobei die Vorrichtung zur Eingrenzung der Rollbewegung einen Drehstab (10) umfasst, der mit dem Fahrgestell verbunden ist, und dessen freie Enden dazu vorgesehen sind, jeweils mit den Radaufhängungen gekoppelt zu werden,

   wobei die Vorrichtung zur Eingrenzung der Rollbewegung mindestens einen Aktuator (13, 16, 20, 140) umfasst, der einen ersten Bereich aufweist, der an einem exzentrischen Punkt bezüglich der Mittelachse des Fahrzeugs des Drehstabs durch eine Verbindung Aktuator-Stab (14) verbunden ist, und einen zweiten Bereich, der mit dem Fahrgestell durch eine Verbindung Aktuator-Fahrgestell (15) verbunden ist, wobei der mindestens eine Aktuator Betätigungsmittel aufweist, um eine relative Verschiebung zwischen dem ersten und dem zweiten Bereich hervorzurufen, wobei der mindestens eine Aktuator so angeordnet ist, dass er einen im Wesentlichen vertikalen Abstand zwischen dem exzentrischen Punkt und dem Fahrgestell je nach einem Steuersignal einstellt, wobei die aktive Vorrichtung zur Eingrenzung der Rollbewegung Steuermittel umfasst, um ein Steuersignal in Richtung des mindestens einen Aktuators auszusenden, **dadurch gekennzeichnet, dass** der mindestens eine Aktuator elektrische Betätigungsmittel umfasst.

2. Aktive Vorrichtung zur Eingrenzung der Rollbewegung nach Anspruch 1, **dadurch gekennzeichnet, dass** der erste Bereich eines Aktuators (13a, 13b) mit dem zweiten Bereich des Aktuators durch eine Drehverbindung (60, 84) der Achse (Y1, Y3) parallel zu einer Querrichtung (Y) des Fahrgestells verbunden ist, wobei der erste Bereich so angebracht ist, dass die Achse der Drehverbindung und der exzentrische Punkt des Drehstabs in einer Ebene liegen, die im Wesentlichen horizontal bezüglich des Fahrgestells ist, wobei der Aktuator Mittel zur Reduktion der Kraft umfasst, die mit den Betätigungsmitteln gekoppelt und dazu in der Lage sind, eine Drehung des ersten Bereichs bezüglich des zweiten Bereichs hervorzurufen.

3. Aktive Vorrichtung zur Eingrenzung der Rollbewegung nach Anspruch 2, **dadurch gekennzeichnet, dass** die Mittel zur Reduktion der Kraft einen Reduktor mit Schraubenmutter (71) umfassen, wobei die Betätigungsmittel dazu in der Lage sind, die Schraube (70) in einer Längsrichtung des Fahrgestells in Drehung zu versetzen, wobei die Schraube dazu in der Lage ist, die Mutter (72) entlang der Längsachse in Drehung zu versetzen, wobei die Mutter und einer der Bereiche (55) des Aktuators in Bezug zueinander fest sind, wobei die Schraube mit dem anderen Bereich (56) des Aktuators durch eine Drehverbindung (66) der Achse (Y2) parallel zu einer Querrichtung des Fahrgestells verbunden ist.

4. Aktive Vorrichtung zur Eingrenzung der Rollbewegung nach Anspruch 2, **dadurch gekennzeichnet, dass** die Mittel zur Reduktion der Kraft einen kreisförmigen Sektor (91) und eine Endlosschraube (87) umfassen, wobei die Betätigungsmittel dazu in der Lage sind, die Endlosschraube in Drehung zu versetzen, wobei die Endlosschraube dazu in der Lage ist, den kreisförmigen Sektor gemäß der Achse (Y3) der Drehverbindung in Drehung zu versetzen, wobei der kreisförmige Sektor und der erste Bereich (80) in Bezug zueinander fest sind.

5. Aktive Vorrichtung zur Eingrenzung der Rollbewegung nach einem der Ansprüche 1 bis 4, **dadurch gekennzeichnet, dass** der erste Bereich eines Aktuators (13c, 13d) mit dem zweiten Bereich des Aktuators durch eine Schiebeverbindung (106, 124) der Schiebeachse (Z6, Z7), ausgerichtet gemäß der vertikalen Richtung (Z), verbunden ist, wobei der Aktuator Mittel zur Reduktion der Kraft umfasst, die mit den Betätigungsmitteln gekoppelt und dazu in der Lage sind, den ersten Bereich bezüglich des zweiten Bereichs in eine als vertikal bezeichnete Richtung zu verschieben.

6. Aktive Vorrichtung zur Eingrenzung der Rollbewegung nach Anspruch 5, **dadurch gekennzeichnet, dass** die Mittel zur Reduktion der Kraft eine Zahnstange (103) und ein Ritzel (109) umfassen, wobei die Betätigungsmittel dazu in der Lage sind, das Ritzel zu drehen, um die Zahnstange gemäß der Schiebeachse in der als vertikal bezeichneten Richtung zu bewegen, wobei die Zahnstange und der erste Bereich (100) in Bezug zueinander fest sind.

7. Vorrichtung zur Eingrenzung der Rollbewegung nach Anspruch 5, **dadurch gekennzeichnet, dass** die Mittel zur Reduktion der Kraft einen Reduktor mit Schraubenmutter (120) umfassen, wobei die Betätigungsmittel dazu in der Lage sind, die Schraube (119) gemäß einer Achse in der als vertikal bezeichneten Richtung in Drehung zu versetzen, wobei die Schraube dazu in der Lage ist, die Mutter (122) gemäß der Achse in der als vertikal bezeichneten Richtung in Drehung zu versetzen, wobei die Mutter und der erste Bereich (110) des Aktuators in Bezug zueinander fest sind.

8. Aktive Vorrichtung zur Eingrenzung der Rollbewegung nach einem der Ansprüche 1 bis 7, **dadurch gekennzeichnet, dass** sie zwei Aktuatoren (13, 16) umfasst, die einerseits mit dem Fahrgestell und andererseits an zwei jeweils exzentrischen Punkten, die sich auf beiden Seiten der Mitte des Drehstabs befinden, verbunden sind.

9. Aktive Vorrichtung zur Eingrenzung der Rollbewegung nach Anspruch 8, **dadurch gekennzeichnet, dass** die Steuermittel dazu in der Lage sind, zwei Steuersignale in Richtung der jeweiligen Aktuatoren auszusenden, so dass, wenn ein erster der Aktuatoren den im Wesentlichen vertikalen Abstand zwischen dem exzentrischen Punkt, der ihm zugeordnet ist, und dem Fahrgestell erhöht, ein zweiter der Aktuatoren den im Wesentlichen vertikalen Abstand zwischen dem exzentrischen Punkt, der ihm zugeordnet ist, und dem Fahrgestell verringert.

10. Aktive Vorrichtung zur Eingrenzung der Rollbewegung nach Anspruch 8 oder 9, **dadurch gekennzeichnet, dass** ein erster der Aktuatoren eine schnellere Antwortszeit aufweist als ein zweiter der Aktuatoren.

11. Vorrichtung zur Eingrenzung der Rollbewegung nach einem der Ansprüche 8 oder 10, **dadurch gekennzeichnet, dass** ein erster der Aktuatoren einen kürzeren Weg aufweist als ein zweiter der Aktuatoren.

12. Vorrichtung zur Eingrenzung der Rollbewegung nach einem der Ansprüche 1 bis 11, **dadurch gekennzeichnet, dass** die Verbindung Aktuator-Stab (14) eines Aktuators eine Drehung des ersten Bereichs des ersten Aktuators bezüglich des Drehstabs gemäß einer Achse (L) des Drehstabs ermöglicht.

13. Aktive Vorrichtung zur Eingrenzung der Rollbewegung nach Anspruch 12, **dadurch gekennzeichnet, dass** die Verbindung Aktuator-Stab des Aktuators eine Drehung des ersten Bereichs des ersten Aktuators bezüglich des Drehstabs in einer Längsrichtung (X) des Fahrzeugs ermöglicht.

14. Vorrichtung zur Eingrenzung der Rollbewegung nach Anspruch 13, **dadurch gekennzeichnet, dass** die Verbindung Aktuator-Stab des Aktuators eine Verschiebung des ersten Bereichs des Aktuators bezüglich des Drehstabs gemäß der Achse (L) ermöglicht.

15. Vorrichtung zur Eingrenzung der Rollbewegung nach einem der Ansprüche 1 bis 14, **dadurch gekennzeichnet, dass** der zweite Bereich eines Aktuators bezüglich des Fahrgestells fest ist.

16. Vorrichtung zur Eingrenzung der Rollbewegung nach Anspruch 1, **dadurch gekennzeichnet, dass** der mindestens eine Aktuator (140) zwei erste Bereiche umfasst, die an zwei exzentrischen Punkten des Drehstabs (10), die sich auf beiden Seiten der Mitte des Drehstabs befinden, durch zwei Verbindungen Aktuator-Stab (14, 17) verbunden sind, wobei der mindestens eine Aktuator dazu in der Lage ist, einen im Wesentlichen vertikalen Abstand zwischen jedem der exzentrischen Punkte und dem Fahrgestell je nach dem Steuersignal einzustellen.

**17.** Vorrichtung zur Eingrenzung der Rollbewegung nach Anspruch 16, **dadurch gekennzeichnet, dass** mindestens eine der Verbindungen Aktuator-Stab eine Verschiebung des Drehstabs bezüglich des entsprechenden ersten Bereichs in einer Querrichtung des Fahrgestells ermöglicht, wobei der mindestens eine Aktuator Mittel zur Reduktion der Kraft mit einem Reduktor mit Schraubenmutter (144) umfasst, wobei die Betätigungsmittel dazu in der Lage sind, die Schraube (143) in einer Querrichtung (Y) des Fahrgestells in Drehung zu versetzen, wobei die Schraube dazu in der Lage ist, die Mutter (145) gemäß der Querachse zu verschieben, wobei die Mutter durch eine Drehverbindung (146) der Achse (X10) parallel zu einer Längsrichtung des Fahrgestells mit einem dritten Bereich des mindestens einen Aktuators verbunden ist, wobei der dritte Bereich mit den zwei ersten Bereichen so verbunden ist, dass, wenn einer der ersten Bereiche eine Verschiebung bezüglich des Fahrgestells in einer Verschiebungsrichtung durchführt, der andere der ersten Bereiche eine Verschiebung bezüglich des Fahrgestells in einer entgegengesetzten Richtung zur Verschieberichtung durchführt.

FIG.1

FIG.2

FIG.3

EP 1 810 853 B1

FIG.4

FIG.5

FIG.6

FIG.7

17

FIG.8

FIG.9

FIG.11

FIG.10

FIG.10A

FIG.12

FIG.13

FIG.14

FIG.15

FIG.16

FIG.17

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004080734 A
- EP 1103395 A